# EUROPÄISCHE PATENTANMELDUNG

(11) **EP 1 837 240 A1**
(43) Veröffentlichungstag der Anmeldung: **26.09.2007**
(21) Anmeldenummer: 06111556.4
(22) Anmeldetag: 22.03.2006
(51) Int. Cl.: B60R 9/06

(54) **Gepäckbox**

(71) Anmelder: MFT TRANSPORT SYSTEME GMBH, 74532 Ilshofen-Grossallmerspann (DE)
(72) Erfinder: Bohn, Peter MFT TRANSPORT SYSTEME GMBH, 74532 Ilshofen-Eckertshausen (DE)
(74) Vertreter: TBK-Patent

(57) **Zusammenfassung**

Eine Gepäckbox zur Befestigung auf einer Anhängekupplung hat ein oberes Deckelelement (1) und ein unteres Deckelelement (2). Die beiden Deckelelemente (1,2) sind über ein klapp-/faltbares Element (3) miteinander verbunden. Bei der auf diese Weise ausgebildeten Gepäckbox, können die Deckelelemente (1, 2) durch das klapp-/faltbare Element (3) relativ zueinander bewegt werden, um ein Volumen der Gepäckbox zu verändern. Die Gepäckbox kann über einen Reißverschluss (4), der die beiden Deckelelemente (1, 2) miteinander verbindet, in dem Zustand fixiert werden, in dem die Gepäckbox ein minimales Volumen einnimmt.

## Beschreibung

Die Erfindung betrifft eine Gepäckbox mit einem variablen Volumen zur Befestigung auf einer Anhängekupplung eines Kraftfahrzeugs, vorzugsweise eines PKW's.

Aus dem Stand der Technik ist eine Gepäckbox zur Befestigung auf einer Anhängekupplung bekannt. Diese Gepäckbox wird auf einem Träger montiert bzw. ist an diesem befestigt, der wiederum an einer Anhängekupplung eines Fahrzeugs befestigt ist. Die Gepäckbox besteht im Wesentlichen aus zwei starren Deckelelementen, die aus Kunststoff ausgebildet sind und an einer Seite über ein Scharnier oder dergleichen miteinander verbunden sind, sodass das obere Deckelelement aufgeklappt werden kann, um die Gepäckbox zu beladen.

Aufgrund der starren Konstruktion der Deckelelemente hat die bekannte Gepäckbox jedoch immer die gleichen Außenabmessungen. Egal, ob die Gepäckbox nicht, nur teilweise oder vollständig gefüllt ist, bleibt das von ihr eingenommene Volumen immer dasselbe. Falls die Gepäckbox nicht benutzt wird und z.B. im Keller oder in der Garage aufbewahrt wird, nimmt sie deshalb unnötig viel Raum ein. Daher wäre es wünschenswert, das Volumen der Gepäckbox für eine optimale Verstaumöglichkeit verringern zu können. Da sich außerdem das Fahrverhalten mit zunehmender Größe der Gepäckbox verschlechtert bzw. der Luftwiderstandswert sich erhöht, wäre es auch im Falle der Nutzung an einem Fahrzeug wünschenswert, das Volumen der Gepäckbox je nach Beladungszustand variieren zu können, sodass diese bei einer Befestigung am Fahrzeug das jeweils kleinstmögliche Volumen einnimmt.

Daher liegt der Erfindung die Aufgabe zugrunde, eine verbesserte Gepäckbox zur Befestigung auf einer Anhängekupplung bereitzustellen, die eine einfachere Handhabung ermöglicht.

Diese Aufgabe wird durch eine Gepäckbox mit den Merkmalen gemäß dem Patentanspruch 1 gelöst. Das Grundprinzip der Erfindung besteht demzufolge darin, dass die Gepäckbox zusammengeklappt/-gefaltet werden kann, um hierdurch ihr Volumen zu verringern. Insbesondere besteht der Kern der Erfindung darin, dass die Gepäckbox ein erstes, vorzugsweise oberes Deckelelement und ein zweites, vorzugsweise unteres Deckelelement hat, die durch ein klapp-/faltbares Element miteinander verbunden sind. Aufgrund dieses klapp-/faltbaren Elements kann der Abstand der Deckelelemente zueinander verändert werden, so dass das Volumen der Gepäckbox verändert werden kann.

Weitere vorteilhafte Ausgestaltungen der Erfindung sind Gegenstand der Unteransprüche.

Vorzugsweise sind das obere Deckelelement und das untere Deckelelement aus Kunststoff ausgebildet. Sie können jedoch auch aus Aluminium oder jedem anderen Material, wie z. B. einem Verbundwerkstoff ausgebildet sein, das die Anforderungen einer ausreichenden Festigkeit bzw. Stabilität erfüllt. Vorzugsweise kann das obere Deckelelement zur Be-/Entladung der Gepäckbox geöffnet werden. Dazu ist es zweiteilig ausgebildet, wobei die zwei Teile miteinander verbunden sind, z.B. klappbar über ein Scharnier, und kann durch eine geeignete Vorrichtung z.B. einem Reißverschluss, Schnappverschluss, Riemenverschluss, etc., geschlossen gehalten werden.

Das klapp-/faltbare Element ist vorzugsweise aus einem flexiblen Stoff oder Tuch gefertigt. Das klapp-/faltbare Element kann jedoch jedes andere Element sein, das gestattet, dass die beiden Deckelement relativ zueinander bewegt werden können, wie beispielsweise ein Faltenbalg oder Elemente, die über ein Scharnier miteinander verbunden sind. Das klapp-/faltbare Element kann wasser- und winddichte Eigenschaften aufweisen, um den Inhalt der Gepäckbox vor Witterungseinflüssen zu schützen. Des Weiteren kann es atmungsaktive Eigenschaften aufweisen, auch zusätzlich zur Wasser- und Winddichtheit. Falls sich Inhalt mit hoher Feuchtigkeit, wie z. B. verschwitzte Kleidung, in der Gepäckbox befindet, kann durch die Atmungsaktivität gewährleistet werden, dass die Feuchtigkeit durch die Gepäckbox entweichen kann. Zum Erreichen der wasser-/ winddichten bzw. atmungsaktiven Eigenschaft kann das klapp-/faltbare Element mit einer diese Eigenschaften aufweisenden Membran versehen sein bzw. aus dieser bestehen.

Des Weiteren kann das klapp-/faltbare Element so ausgebildet sein, dass es für ein Be-/Entladen der Gepäckbox geöffnet werden kann. Falls sich das obere Deckelelement z.B. durch sich auf ihm befindliche Ladung nicht öffnen lässt, kann auf diese Weise erreicht werden, dass der Innenraum der Gepäckbox ohne Entfernung der Ladung zugänglich ist. Bevorzugt wird dies über einen in dem klapp-/faltbaren Element ausgebildeten Reißverschluss realisiert. Vorzugsweise ist der Reißverschluss wasserdicht, um ein Eindringen von Feuchtigkeit in die Gepäckbox zu verhindern.

Darüber hinaus können das obere und untere Deckelelement in dem zusammengefalteten Zustand, in dem die Gepäckbox das minimale Volumen einnimmt über einen Reißverschluss miteinander verbunden werden. Bevorzugt läuft der Reißverschluss um den gesamten Außenumfang und an der Außenseite der Deckelelemente um. Er kann sich aber auch nur über einen Abschnitt des Außenumfangs erstrecken oder mehrteilig ausgebildet sein. Vorzugsweise ist der Reißverschluss wasserdicht, um ein Eindringen von Feuchtigkeit durch diesen hindurch in die Gepäckbox zu verhindern. Durch den Reißverschluss kann die Gepäckbox in dem zusammengefalteten Zustand fixiert werden, sodass ein Auseinanderbewegen der Deckelelemente verhindert wird. Um diese Funktion zu gewährleisten kann die Gepäckbox aber auch mit jeder anderen Einrichtung versehen sein, die sicherstellt, dass die Deckelelemente in dem zusammengefalteten Zustand fixiert sind, wie z.B. einem Spannriemen, einem Schnallenverschluss, einem Kunststoffbügel und dergleichen.

Bevorzugt hat das obere Deckelelement einen größeren Außenumfang als das untere Deckelelement, so dass das untere Deckelelement teilweise in das obere Deckelelement eingeschoben werden kann, um den Raum zu minimieren, den die Gepäckbox in dem vollständig zusammengefalteten Zustand einnimmt .

Bevorzugt sind die Deckelelemente des Weiteren über einen Mechanismus miteinander verbunden, der eine seitliche Bewegung der Deckelelemente zueinander unterbindet und nur eine Bewegung der Deckelelemente in ihrer Beabstandungsrichtung zulässt, die zu der seitlichen Bewegungsrichtung senkrecht ist. Dieser Mechanismus besteht beispielsweise aus zwei gelenkig miteinander verbunden Streben (Scherengelenk) bestehen, wobei sich die Deckelelemente bei einem Aufspreizen der Streben zueinander beabstanden, einem klappbaren Bügelmechanismus, Gleitschienen, in denen die Deckelelemente zueinander gleiten können, Teleskopmechanismen und dergleichen.

Des weiteren kann die Gepäckbox mit einem Federelement versehen sein, welches eine Vorspannkraft auf die Deckelelemente aufbringt, um diese zueinander zu beabstanden. Dieses Federelement kann beliebig ausgebildet sein, z. B. als Gasdruckfeder, Spiralfeder, Blattfeder, etc. Das Federelement kann in den vorstehend genannten Mechanismus integriert sein.

Bevorzugt sind in dem oberen Deckelelement Vertiefungen zur Stabilisierung ausgebildet. Vorteilhafterweise haben diese Vertiefungen zur Stabilisierung einen halbkreisförmigen Querschnitt. Vorteilhafterweise sind die Vertiefungen so ausgebildet, dass in ihnen Fahrradlaufräder aufgenommen werden können. Die Vertiefungen können sich über das gesamte obere Deckelelement erstrecken, oder aber nur teilweise in diesem ausgebildet sein.

Des Weiteren kann in dem oberen Deckelement eine Fixierungsvorrichtung ausgebildet sein. Mit dieser Fixierungsvorrichtung kann eine Ladung, wie z.B. Fahrradlaufräder, an dem oberen Deckelelement fixiert werden, so dass diese sich nicht relativ zu dem oberen Deckelelement bewegt. Die Fixierungsvorrichtung kann beispielsweise ein Kunststoffband mit Ratschenverschluss, ein Spannriemen, ein Bügelverschluss, etc. sein. Außerdem kann in dem oberen Deckelelement eine Befestigung für eine Schiene ausgebildet sein, in der Fahrradlaufräder aufgenommen werden können.

Des Weiteren kann das obere Deckelelement mit einer Aufnahme versehen sein, in der ein Halter aufgenommen werden kann, an dem beispielsweise Fahrräder gehalten bzw. befestigt werden. Der Halter kann an einer Anhängekupplung bzw. einem Träger auf der Anhängekupplung abgestützt sein. Die Aufnahme selbst kann entweder einstückig mit dem oberen oder unteren Deckelelement ausgebildet sein oder aber mit dem oberen oder unteren Deckelelement z.B. durch eine Schraubverbindung, Nietverbindung, etc., fest verbunden sein. Die Aufnahme ist so gestaltet, dass sie eine Verschiebung des Halters relativ zu der Gepäckbox gestattet. Dadurch kann die Position des Halters relativ zur Gepäckbox bzw. zu dem oberen Deckelelement verändert werden. Darüber hinaus kann die Aufnahme mit einer Arretierungsvorrichtung versehen sein, die den Halter an der Aufnahme fixiert. Die Arretierungsvorrichtung ermöglicht eine reib- oder kraftschlüssige Verbindung zwischen der Aufnahme und dem Halter und ist z.B. eine Schraube, die durch ein in der Aufnahme ausgebildetes Gewinde mit dem Halter eingreift oder ein Element, dass um den Außenumfang der Aufnahme umläuft und diese so verformen kann, dass sie den Halter einklemmt. Durch die Arretierungsvorrichtung kann zum einen der Halter an der Gepäckbox fixiert werden, zum anderen kann das obere Deckelelement aber auch an dem Halter abgestützt werden, sodass die Gepäckbox auf ein gewünschtes Volumen eingestellt werden kann und diese zusätzlich stabilisiert wird-

Die Erfindung wird nunmehr nachfolgend anhand bevorzugter Ausführungsbeispiele unter Bezugnahme auf die begleitenden Zeichnungen näher erläutert.
Fig. 1 zeigt die Gepäckbox gemäß dem ersten Ausführungsbeispiel der vorliegenden Erfindung in dem Zustand, in dem sie ein maximales Volumen hat.
Fig. 2 zeigt die Gepäckbox von Fig. 1 in dem zusammengefalteten Zustand, wo sie ein minimales Volumen hat, und
Fig. 3 zeigt die Gepäckbox gemäß einem zweiten Ausführungsbeispiel der vorliegenden Erfindung mit einer an dem oberen Deckelelement angebrachten Halteraufnahme und einem Halter zum Halten von Fahrrädern.

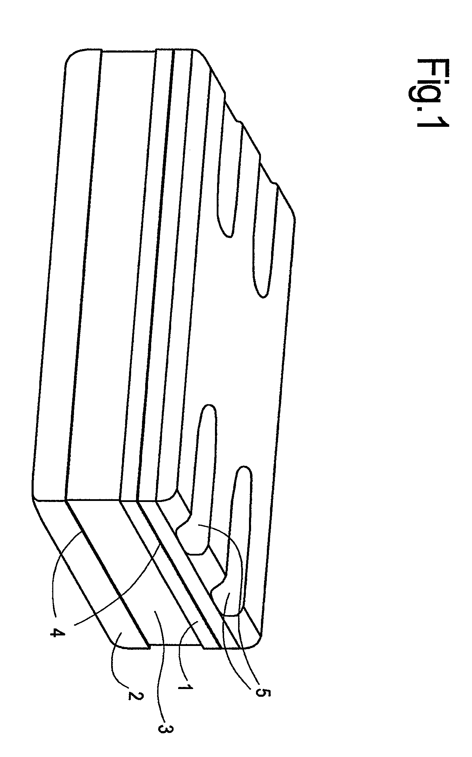

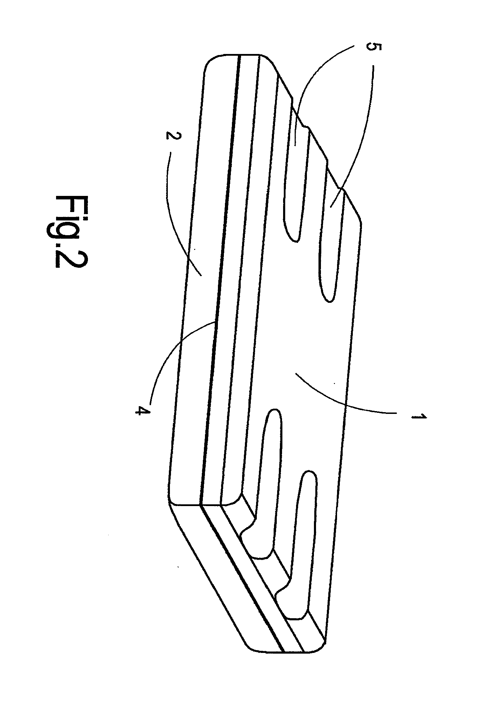

Fig. 1 und 2 zeigen den Aufbau einer Gepäckbox, die auf einer Anhängekupplung eines Fahrzeugs bzw. auf einem an der Anhängekupplung abgestütztem Gestell montiert werden kann, gemäß einem ersten Ausführungsbeispiel der vorliegenden Erfindung. Wie aus Fig. 1 entnommen werden kann, besteht die Gepäckbox prinzipiell aus einem oberen Deckelelement 1, das zum Beladen der Gepäckbox vorzugsweise mittels eines Reißverschlusses (nicht dargestellt) geöffnet werden kann, und einem unteren Deckelelement 2. Die beiden Deckelemente haben jeweils eine Halbschalenform und sind durch ein klapp-/faltbares Element 3 miteinander verbunden. Das klapp-/faltbare Element 3 ist in diesem Ausführungsbeispiel eine wind- und wasserdichte Stoffmembran, die jeweils an der Innenseite der Deckelelemente 1, 2 über deren gesamten Umfang befestigt ist. Das heißt, das obere Deckelelement 1, das untere Deckelelement 2 sowie das klapp-/faltbare Element 3 bilden ein abgeschlossenes Volumen bzw. einen abgeschlossenen Gepäckraum aus. Das Volumen der Gepäckbox kann durch Zusammenklappen/-falten des klapp-/faltbaren Elements 3 geändert werden. Dazu wird z.B. ausgehend von dem in Fig. 1 gezeigten Zustand, in dem die Gepäckbox das maximale Volumen aufweist, das obere Deckelelement 1 in Richtung des unteren Deckelelements 2 bewegt, wodurch das Volumen schrittweise verringert wird. Das Volumen kann bis zu dem vollständig zusammengefalteten/-geklappten Zustand, der in Figur 2 gezeigt ist, verringert werden.

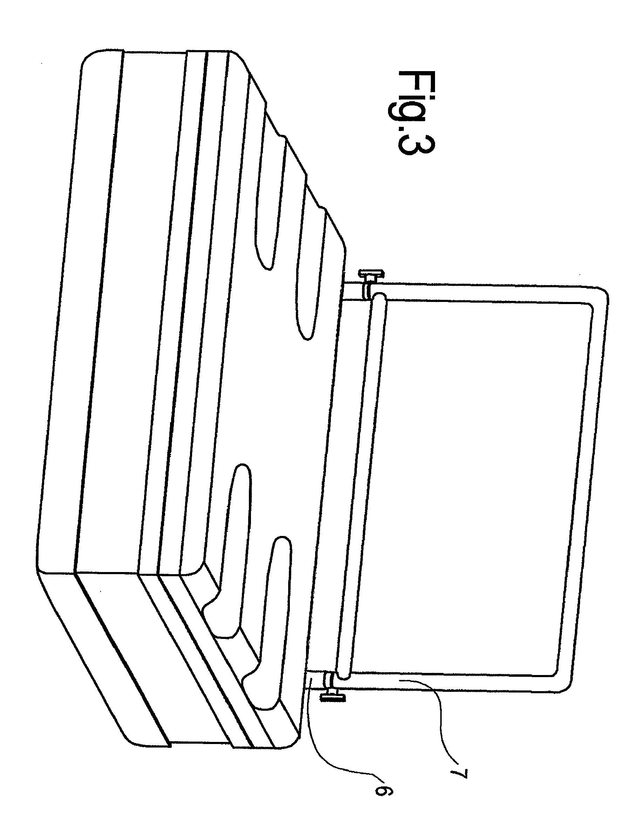

In diesem Zustand können, wie in Fig. 3 gezeigt ist, das obere und untere Deckelelement 1, 2 über einen Reißverschluss 4 miteinander verbunden werden. Eine Seite des Reißverschlusses 4 ist an der Außenseite des oberen Deckelelements 1 befestigt und die andere Seite des Reißverschlusses 4 ist an der Außenseite des unteren Deckelelements 5 befestigt. Der Reißverschluss 4 läuft um den gesamten Außenumfang der Deckelelemente um. Der Reißverschluss 4 ist wasserdicht, um ein Eindringen von Feuchtigkeit durch diesen hindurch in die Gepäckbox zu verhindern. Durch den Reißverschluss 4 kann die Gepäckbox in dem vollständig zusammengefalteten Zustand fixiert werden, so dass ein Auseinanderbewegen der Deckelelemente verhindert wird.

In dem oberen Deckelelement 1 sind Vertiefungen 5 zur Stabilisierung ausgebildet. Die Vertiefungen 5 erstrecken sich in Längsrichtung in der Oberseite des oberen Deckelelements 1 und haben einen halbkreisförmigen Querschnitt. Die Vertiefungen 5 sind in der Oberseite nicht durchgängig, sondern nur in der Nähe des Randbereichs der Oberseite ausgebildet. Außerdem sind sie so ausgebildet, dass in ihnen Fahrradlaufräder aufgenommen werden können.

Fig. 3 zeigt die Gepäckbox gemäß einem zweiten Ausführungsbeispiel der vorliegenden Erfindung. Die Gepäckbox gemäß dem zweiten Ausführungsbeispiel ist identisch zu der Gepäckbox gemäß dem ersten Ausführungsbeispiel. Zusätzlich ist einstückig mit dem oberen Deckelelement 1 eine Aufnahme 6 ausgebildet, in der ein Halter 7 zum Halten bzw. Befestigen von Fahrradrahmen eingeschoben werden kann, wobei die Laufräder der Fahrräder in den Vertiefungen 5 aufgenommen werden können. Die Aufnahme hat eine Arretierungsvorrichtung, mit der Halter 7 in der Aufnahme arretiert werden kann, um die gewünschte Position des Halters bezüglich dem oberen Deckelelement einzustellen, bzw. um das obere Deckelelement an dem Halter abzustützen.

Eine Gepäckbox zur Befestigung auf einer Anhängekupplung hat ein erstes, vorzugsweise oberes Deckelelement (1) und ein zweites, vorzugsweise unteres Deckelelement (2). Die beiden Deckelelemente (1,2) sind über ein klapp-/faltbares Element (3) miteinander verbunden. Bei der auf diese Weise ausgebildeten Gepäckbox, können die Deckelelemente (1, 2) durch das klapp-/faltbare Element (3) relativ zueinander bewegt werden, um ein Volumen der Gepäckbox zu verändern. Die Gepäckbox kann über einen Reißverschluss (4), der die beiden Deckelelemente (1, 2) miteinander verbindet, in dem Zustand fixiert werden, in dem die Gepäckbox ein minimales Volumen einnimmt.

## Patentansprüche

1. Gepäckbox zur Befestigung auf einer Anhängekupplung mit zumindest zwei Deckelelementen (1, 2),
**dadurch gekennzeichnet, dass**
die beiden Deckelelemente (1, 2) durch ein klapp-/faltbares Element (3) miteinander verbunden sind, und
das eine Deckelelement (1) durch das klapp-/faltbare Element (3) relativ zu dem anderen Deckelelement (2) bewegbar ist, um ein Volumen der Gepäckbox zu verändern.

2. Gepäckbox gemäß Anspruch 1, **dadurch gekennzeichnet, dass** das die Deckelelemente (1, 2) wahlweise aus Kunststoff oder Aluminium ausgebildet sind.

3. Gepäckbox gemäß Anspruch 1 oder 2, **dadurch gekennzeichnet, dass** das klapp-/faltbare Element (3) eine Stoffmembran ist.

4. Gepäckbox gemäß Anspruch 1 oder 2, **dadurch gekennzeichnet, dass** das klapp-/faltbare Element (3) ein Faltenbalg ist.

5. Gepäckbox gemäß Anspruch 1 oder 2, **dadurch gekennzeichnet, dass** das klapp-/faltbare Element (3) aus einem Element/Elementen besteht, das/die über ein Scharnier zueinander geklappt werden kann/können.

6. Gepäckbox gemäß einem der Ansprüche 1 bis 5, **dadurch gekennzeichnet, dass** das klapp-/faltbare Element (3) wasser- und winddicht ist.

7. Gepäckbox gemäß einem der Ansprüche 1 bis 6, **dadurch gekennzeichnet, dass** das klapp-/faltbare Element (3) atmungsaktiv ist oder mit einer atmungsaktiven Membran versehen ist.

8. Gepäckbox gemäß einem der Ansprüche 1 bis 7, **dadurch gekennzeichnet, dass** die Gepäckbox mit einem Reißverschluss (4) versehen ist, über den das eine, vorzugsweise obere Deckelelement (1) mit dem andern, vorzugsweise unteren Deckelelement (2) verbunden werden kann.

9. Gepäckbox gemäß Anspruch 8, **dadurch gekennzeichnet, dass** der Reißverschluss (4) wasserdicht ist.

10. Gepäckbox gemäß einem der Ansprüche 1 bis 9, **dadurch gekennzeichnet, dass** das eine, vorzugsweise obere und das andere, vorzugsweise untere Deckelelement (1, 2) über einen Mechanismus miteinander verbunden sind, der eine seitliche Verschiebung der Deckelelemente zueinander verhindert und nur eine dazu senkrechte Bewegung von diesen zulässt, um sie zueinander zu beabstanden.

11. Gepäckbox gemäß einem der Ansprüche 1 bis 10, **dadurch gekennzeichnet, dass** die Gepäckbox ein Federelement hat, das die beiden Deckelelemente gegeneinander vorspannt.

12. Gepäckbox gemäß Anspruch 11, **dadurch gekennzeichnet**, das Federelement eine Gasdruckfeder ist.

13. Gepäckbox gemäß einem der Ansprüche 1 bis 12, **dadurch gekennzeichnet, dass** in dem einen, vorzugsweise oberen Deckelelement (1) Vertiefungen (5) zur Stabilisierung ausgebildet sind.

14. Gepäckbox gemäß einem Anspruch 13, **dadurch gekennzeichnet, dass** die Vertiefungen (5) so ausgebildet sind, dass in ihnen Fahrradlaufräder aufgenommen werden können.

15. Gepäckbox gemäß Anspruch 13 oder 14, **dadurch gekennzeichnet, dass** in dem oberen Deckelelement (1) eine Fixierungsvorrichtung ausgebildet ist, die eine Bewegung eines auf dem oberen Deckelelement (1) zu fixierenden Elements relativ zu dem oberen Deckelelement (2) verhindert.

16. Gepäckbox gemäß einem der Ansprüche 1 bis 15, **dadurch gekennzeichnet, dass** an der Gepäckbox eine Aufnahme (6) ausgebildet ist, um einen Halter (7) aufzunehmen, an dem ein Fahrrad befestigt werden kann.

17. Gepäckbox gemäß Anspruch 16, **dadurch gekennzeichnet, dass** die Aufnahme (6) derart gestaltet ist, dass sie eine Verschiebung des Halters (7) relativ zu dem oberen Deckelelement (1) zulässt.

18. Gepäckbox gemäß Anspruch 17, **dadurch gekennzeichnet, dass** die Aufnahme (6) derart gestaltet ist, dass der Halter (7) durch diese arretiert werden kann.
